# EUROPÄISCHE PATENTSCHRIFT

(11) **EP 0 902 204 B1**
(45) Veröffentlichungstag und Bekanntmachung des Hinweises auf die Patenterteilung: **21.11.2001**
(21) Anmeldenummer: 98116633.3
(22) Anmeldetag: 03.09.1998
(51) Int. Cl.: F16D 3/58

(54) **Drehelastische Wellenkupplung**
Coupling with torsional resiliency
Accouplement à élasticité en torsion

(30) Priorität: 09.09.1997 DE 19739334
(43) Veröffentlichungstag der Anmeldung: 17.03.1999
(73) Patentinhaber: Centa-Antriebe Kirschey GmbH, 42781 Haan (DE)
(72) Erfinder: Kirschey, Gerhard, Dipl.-Ing., 42329 Wuppertal (DE)
(74) Vertreter: Patentanwälte Ostriga & Sonnet

(56) Entgegenhaltungen:
- FR-A- 2 176 335
- FR-A- 2 350 501
- US-A- 2 125 559
- US-A- 5 657 545

## Beschreibung

Die Erfindung bezieht sich auf eine drehelastische Wellenkupplung nach dem Oberbegriff des Anspruchs 1. Hierbei handelt es sich um eine Wellenkupplung, die man üblicherweise mit "Gummirollenkupplung" bezeichnet.

Zum besseren Verständnis der Erfindung ist es wesentlich, diesen Kupplungstyp gegen eine elastische Klauenkupplung abzugrenzen, was nachfolgend anhand der Fig. 3 und 4 der DE 26 30 506 A1 geschehen soll. Dabei entsprechen die dortige zentrale Büchse 3 dem Innenkörper nach der vorliegenden Erfindung, die äußere Büchse 5 dem Ringkörper sowie die Zähne 8 und 9 den rippenartigen Erhöhungen.

Bei einer elastischen Klauenkupplung entspricht die Anordnung dieser Teile der Fig. 3 der DE 26 30 506 A1. Kennzeichnend hierfür ist es, daß die rippenartigen Erhöhungen des äußeren Ringkörpers und des Innenkörpers einander in Radialrichtung überdecken, wobei in Umfangsrichtung auf je eine rippenartige Erhöhung am Innenkörper eine rippenförmige Erhöhung am Ringkörper folgt und zwischen je zwei Ringkörpern eine Gummirolle bzw. ein elastischer Rollkörper eingelegt ist. Charakteristisch für diese Bauart ist es, daß die elastischen Körper auf Druck beansprucht werden, allerdings in jeder Drehrichtung nur jeder zweite Rollkörper.

Hiervon unterscheidet sich eine Gummirollenkupplung entsprechend Fig. 4 der DE 26 30 506 A1 im wesentlichen dadurch, daß zwischen den rippenartigen Erhöhungen des Innenkörpers und den rippenartigen Erhöhungen des äußeren Ringkörpers keine radiale Überdeckung vorliegt, sondern ein umlaufender Spalt verbleibt. Aufgrund des Bewegungsspaltes können also bei relativer Umfangsverdrehung jeweils zwei gegeneinander gerichtete rippenartige Erhöhungen der beiden Kupplungsteile im Rahmen des erforderlichen Drehbewegungsspiels einander passieren. Eine weitere Folge oder Charakteristik dieser Bauart besteht darin, daß die elastischen Rollkörper im wesentlichen auf Scherung beansprucht werden, und zwar sämtliche Rollkörper der Kupplung gleichermaßen sowie unabhängig von der Drehrichtung.

Eine Gummirollenkupplung läßt sich in vorteilhafter Weise drehweich ausbilden und ist deshalb für verschiedene Anwendungsgebiete ein bevorzugter Kupplungstyp. Konstruktionsbedingt kann es jedoch geschehen, daß die Kupplung durchdreht für den Fall, daß z.B. aufgrund von Überhitzungserscheinungen im ausdauernden Betrieb, die Gummirollen verspröden und sich unter Last auflösen, so daß sie eine Drehmomentübertragung zwischen dem äußeren Ringkörper und dem Innenkörper nicht mehr gewährleisten können.

Hiervon ausgehend ist es Aufgabe der Erfindung, bei einer drehelastischen Kupplung des oben erläuterten Gummirollentyps mit möglichst einfachen Mitteln eine wirkungsvolle Durchdrehsicherung zu schaffen.

Die erfindungsgemäße Lösung des oben aufgezeigten Problems ist im Kennzeichenteil des Anspruches 1 angegeben und eine drehelastische Wellenkupplung dementsprechend dadurch gekennzeichnet, daß zumindest im Bereich zweier miteinander korrespondierender Erhöhungen der Bewegungsspalt im wesentlichen radial von der Kupplungsdrehachse weg oder zu ihr hin verlagert ist, derart, daß eine der beiden rippenartigen Erhöhungen an dem einen Kupplungskörper in die Bewegungsbahn der in Umfangsrichtung der Kupplung benachbarten rippenartigen Erhöhung des anderen Kupplungskörpers geraten kann.

In konstruktiver Hinsicht kann dies im Prinzip bedeuten, daß - ausgehend von einer herkömmlichen Rollenkupplung - wenigstens eine rippenartige Erhöhung des einen Kupplungsteils radial verlängert/verkürzt und die korrespondierende Erhöhung des anderen Kupplungsteils radial in dem Maße verkürzt/verlängert ist, daß die rippenartigen Erhöhungen trotz ihrer radialen Verlagerung einander in Umfangsrichtung passieren können.

Damit trägt die Erfindung in überraschender Weise dem Prinzip Rechnung, daß es bei drehelastischen Kupplungen des Gummirollentyps möglich sein muß, daß gegenüberliegende rippenartige Erhöhungen von Innenkörpern und äußeren Ringkörpern in Umfangsrichtung einander im bestimmungsgemäßen Betrieb passieren müssen. Ferner liegt der Erfindung die Erkenntnis zugrunde, daß dieses "Dreh-Wechselspiel" nur über einen gewissen Umfangswinkel zu erfolgen braucht und daß deshalb einander sich nur bei defekten Rollkörpern nähernde rippenartige Erhöhungen von Innenkörper und äußerem Ringkörper radial überdeckend ausgestaltet sein können, obgleich dies an sich dem Konstruktionsprinzip einer Gummirollenkupplung widerspricht.

Die Erfindung stellt sich somit als eine drehelastische Wellenkupplung des Gummirollentyps dar, die sämtliche an sie gestellten Forderungen erfüllen kann, wobei in äußerst geschickter Weise innerhalb der Umfangsverlagerungen im normalen Betrieb das Funktionsprinzip der echten Gummirollenkupplung unangetastet geblieben ist, wohingegen erst bei infolge Zerstörung der elastischen Rollkörper die dann erweiterte Drehverlagerung ausgenutzt wird, mindestens einen Drehanschlag zwischen rippenartigen Erhöhungen von Innenteil und Ringkörper der Kupplung auszubilden.

Bei Klauenkupplungen mit elastischen Kupplungskörpern, wie sie beispielsweise in Fig. 3 der DE 26 30 506 A1 skizziert sind, stellt sich das der Erfindung zugrundeliegende und von ihr auf eigentümliche Weise gelöste Problem deshalb nicht, weil in dem betrachteten Schadensfall, d.h. bei vollständigem Verlust der Stützkraft sämtlicher Gummirollen die sich über einen weiten radialen Bereich überlappenden rippenartigen Erhöhungen von Innenkörper und äußerem Ringkörper konstruktionsbedingt ohnehin direkt kontaktieren und einen Kraftschluß gewährleisten würden.

Aus der US-A-2 125 559 ist eine Wellenkupplung bekannt, bei der ein erstes Kupplungsteil mit einem zweiten Kupplungsteil über ein Zwischenelement verbunden ist. Aus der Fig. 26 dieses Dokuments geht hervor, dass es sich um eine Wellenkupplung des Gummirollentyps handelt, bei der eine Durchdrehsicherung vorgesehen ist. Hierfür erstreckt sich ein Vorsprung des Zwischenelementes radial einwärts in eine Ausnehmung an einem der beiden Kupplungsteile hinein.

Weitere Ausgestaltungen und Vorteile ergeben sich aus den Unteransprüchen sowie aus der nachfolgenden Beschreibung eines in den Zeichnungen dargestellten Ausführungsbeispiels. In den Zeichnungen zeigen:
- Fig. 1: eine schematische, teilweise geschnittene Darstellung einer erfindungsgemäßen Wellenkupplung mit Blickrichtung auf die Seite des Antriebsaggregats, z.B. auf ein Schwungrad,
- Fig. 2: einen Teillängsschnitt entsprechend der Schnittlinie II-II in Fig. 1.

Eine drehelastische Wellenkupplung des Gummirollen-Typs ist in ihrer Gesamtheit mit 10 bezeichnet. Sie umfaßt zunächst einen nabenseitigen Innenkörper 11 und einen äußeren Ringkörper 12, die zueinander und zur Kupplungsdrehachse A konzentrisch angeordnet sind.

Der äußere Ringkörper dient zum Anschluß an das antreibende Aggregat, z.B. an die nicht gezeigte Schwungscheibe eines Dieselmotors, wozu der äußere Ringkörper 12 mit einem Flansch 13 versehen ist, der Durchgangsbohrungen 14 für entsprechende Befestigungsschrauben aufweist.

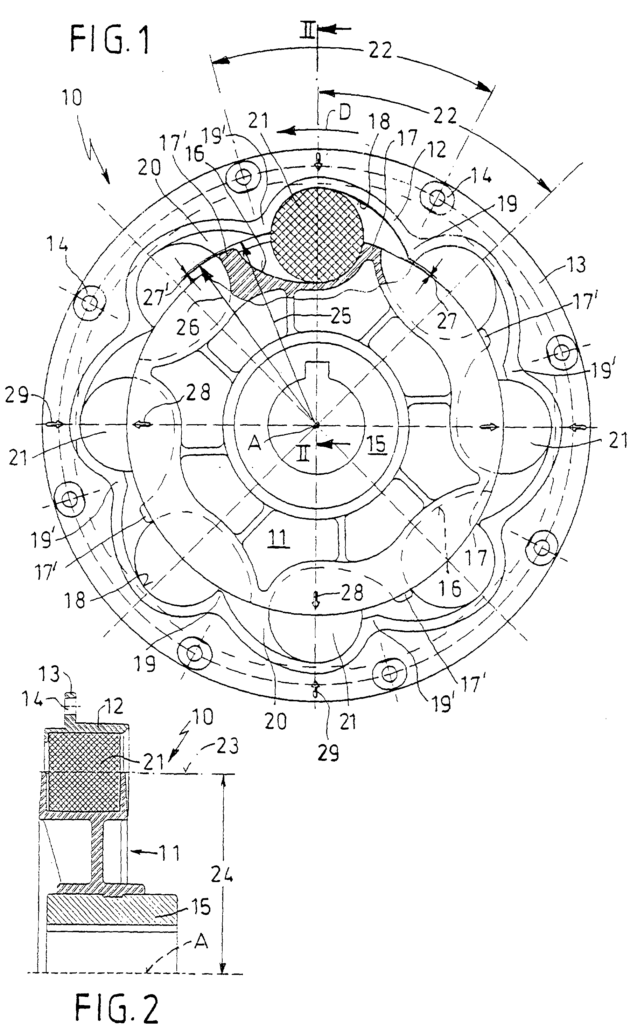

Der Innenkörper 11 steht mit einer Nabe 15 radial und axial in fester Verbindung. Bei dem sich aus Fig. 2 ergebenden Ausführungsbeispiel handelt es sich bei der Nabe 15 um eine Stahlnabe, auf die der nabenseitige Innenkörper 11 der Kupplung 10 im Wege des Verbundgusses aufgebracht ist. Der nabenseitige Innenkörper 11 besteht dabei vorteilhafterweise aus einem Alu-Sandguß, der äußere Ringkörper ebenfalls.

Wie Fig. 1 zeigt, weist der innere Ringkörper 11 Mulden 16 sowie rippenartige Erhöhungen 17 auf, die einander in gleichmäßigen Umfangsabständen abwechseln. Mit anderen Worten: jede Mulde 16 ist zwischen zwei rippenartigen Erhöhungen ausgebildet, die im wesentlichen radial nach außen weisen.

Auch der äußere Ringkörper 12 weist Mulden 18 in regelmäßigen Umfangs- bzw. Winkelabständen 22 auf, die einander mit rippenartigen Erhöhungen 19 abwechseln, wobei diese Erhöhungen 19 nach innen gerichtet sind.

Wie des weiteren aus Fig. 1 ersichtlich ist, bildet jeweils eine nach außen weisende Mulde 16 des Innenkörpers 11 mit einer etwa radial gegenüberliegenden, ebenfalls konkav gewölbten Mulde 18 eine Kammer 20 zur Aufnahme eines gummielastischen Rollkörpers 21 aus.

Beim Ausführungsbeispiel beträgt der Winkelabstand 22 zwischen je zwei aufeinanderfolgenden wiederkehrenden Elementen 45°, so daß Mulden, Rollkörper und rippenförmige Erhöhungen am Innenteil sowie am äußeren Ringkörper in regelmäßigen Umfangsabständen insgesamt achtmal vorhanden sind. Selbstverständlich sind auch andere Winkelabstände und eine entsprechend abweichende Zahl vorhandener Elemente möglich.

Bei einer drehelastischen Kupplung des Gummirollentyps liegen die Mittelpunkte der Rollkörper 21 auf einem Teilkreis 23 mit dem Radius 24 (Fig. 2). Konstruktions- und funktionsbedingt haben daher die rippenartigen Erhöhungen 17 des Innenkörpers 11 eine radiale Erstreckung bis zu einem Radius, der geringfügig kleiner ist als der Radius 24. Demgegenüber reichen die rippenartigen Erhöhungen 19 des äußeren Ringkörpers von außen her nicht ganz bis an den Teilkreis 23 heran, d.h., sie enden auf einem Teilkreis mit einem etwas größeren Radius als dem Radius 24. Zwischen je zwei miteinander korrespondierenden rippenförmigen Erhöhungen 17 und 19 ist somit ein funktionsnotwendiger, schmaler Bewegungsspalt 27 belassen.

Während des Betriebs der Kupplung, der mit einer relativen Umfangsverdrehung zwischen dem Innenkörper 11 und dem Ringkörper 12 innerhalb eines gewissen Winkelbereichs einhergeht, können daher die korrespondierenden rippenartigen Erhöhungen 17 und 19 aneinander vorbeilaufen. Man erkennt dies leicht, wenn man sich - bei festgehaltener Nabe 15 mit Innenkörper 11 - eine Verdrehung des Außenkörpers 12 in Richtung des Pfeiles D (Fig. 1) vorstellt. Dann kann die Erhöhung 19, die rechts neben dem obersten schraffierten Rollkörper 21 liegt, die neben ihm auf derselben Seite liegende rippenartige Erhöhung 17 passieren.

Um bei einer derartigen Kupplung gleichwohl eine Durchdrehsicherung zu erhalten, für den Fall, daß die Gummielemente 21 das Drehmoment nicht mehr zu übertragen in der Lage sind, ist erfindungsgemäß folgendes vorgesehen:
Am Innenkörper 11 ist wenigstens eine rippenförmige Erhöhung 17' vorhanden, die bis zu einem geringfügig größeren radialen Abstand 25 von der Kupplungsdrehachse A reicht, als die auf der in Umfangsrichtung anderen Seite (bezüglich Fig. 1 rechts) desselben Rollkörpers 21 befindliche rippenartige Erhöhung 19 am Ringkörper 12. Entsprechend ist die rippenartige Erhöhung 19' am Ringkörper 12 unter Beibehaltung eines Bewegungsspaltes 27' zurückgenommen.

Bezogen auf Fig. 1 bedeutet dies, daß, wenn bei völligem Verschleiß der Rollkörper 21 der Ringkörper 12 entgegen dem Uhrzeigersinn in Pfeilrichtung D dreht, zunächst die links neben dem obersten Rollkörper 21 mit 19' bezeichnete rippenartige Erhöhung des Außenkörpers 12 die rippenartige Erhöhung 17' des Innenkörpers passiert und sich fortbewegt, bis die zunächst noch rechts neben dem Rollkörper 21 befindliche rippenartigen Erhöhung 19 des Ringkörpers 12 an der Erhöhung 17' anschlägt.

Konkret ist beim dargestellten Ausführungsbeispiel, bei dem eine geradzahliche Anzahl wiederkehrender Elemente vorliegt, die Anordnung insgesamt so getroffen, daß in Umfangsrichtung jede zweite rippenartige Erhöhung 17' auf einem Radius 25 von der Kupplungsdrehachse A endet, der größer ist als der Teilkreis 23 mit dem Radius 24 und daß jede auf derselben Seite des Rollkörpers 21 gelegene rippenförmige Erhöhung 19' des äußeren Ringkörpers 12 soweit verkürzt ist, daß der Radius 26, auf dem sie endet, größer ist als der Radius 25, so daß die rippenartigen Erhöhungen 17' und 19' einander passieren können, und nur diese, wohingegen es beim Kontakt zwischen Erhöhungen 17' und 19 zur Drehmitnahme kommt.

Um einen unverwechselbaren Zusammenbau der Kupplungsteile 11 und 12 zu gewährleisten, sind diese mit Codiermarken 28 und 29 versehen, die zueinander fluchtend ausgerichtet werden. Da die dargestellte Kupplung insgesamt acht Elemente mit vier "Durchdrehsicherungen" umfaßt, gibt es vier passende Zuordnungen, woraus sich die Zahl von je vier Codierelementen 28 am Innenkörper 11 und Codierelementen 29 am Ringkörper 12 erklärt.

Da beim Ausführungsbeispiel sowohl der Innenkörper 11 als auch der äußere Ringkörper 12 Gußteile sind, können die rippenartigen Erhöhungen 19, 19' sowie 17 und 17' in der vorgesehenen Erstreckung und Form direkt mitgegossen werden. Eine spanende Bearbeitung ist nicht erforderlich.

Aus Fig. 1 ist noch erkennbar, daß die jeweiligen Mulden 16 und 18 im Innenkörper 11 und im äußeren Ringkörper 12 in Umfangsrichtung asymmetrisch ausgebildet sind. Dabei ist (der äußere Ringkörper 12 dreht sich in Richtung des Pfeiles D relativ zum Innenkörper 11) die Anordnung so getroffen, daß die flachere Flanke der jeweiligen Mulde 16 bzw. 18 wirksam wird, wodurch die Kupplung in dieser Drehrichtung weicher ist als in der entgegengesetzten Drehrichtung, wie man sich ohne weiteres vorstellen kann, wenn - wie es in Fig. 1 angedeutet ist - der Rollkörper 21 von den zur Umfangsrichtung steileren Flächenbereichen der jeweiligen Mulde 16 bzw. 18 tangiert ist.

## Patentansprüche

1. Drehelastische Wellenkupplung (10) mit einem nabenseitigen Innenkörper (11) und einem äußeren Ringkörper (12) in zur Kupplungsdrehachse (A) konzentrischer Anordnung, wobei die Außenumfangsfläche des Innenkörpers (11) wie auch die Innenumfangsfläche des Ringkörpers (12) mit einander abwechselnden Mulden (16, 18) und rippenartigen Erhöhungen (17, 19 bzw. 17', 19') versehen ist, wobei die mit ihren konkaven Muldenflächen zueinander weisenden Mulden (16, 18) von Innenkörper (11) und Ringkörper (12) Kammern (20) zur Aufnahme je eines gummielastischen Rollkörpers (21) ausbilden, und wobei jeweils zwei unter Belassung eines Bewegungsspaltes (27) gegeneinander gerichtete rippenartige Erhöhungen (17, 19 bzw. 17' 19') von Innenkörper (11) und Ringkörper (12) einander passieren können, **dadurch gekennzeichnet, daß** zumindest im Bereich zweier miteinander korrespondierender Erhöhungen (17', 19') deren Bewegungsspalt (27') im wesentlichen radial von der Kupplungsdrehachse (A) weg oder zu ihr hin verlagert ist, derart, daß eine der beiden rippenartigen Erhöhungen (17') an dem einen Kupplungskörper (11 bzw. 12) in die Bewegungsbahn der in Umfangsrichtung der Kupplung (10) benachbarten rippenartigen Erhöhung (19) des anderen Kupplungskörpers (12 bzw. 11) geraten kann.

2. Wellenkupplung nach Anspruch 1 mit einer geradzahligen Anzahl von Kammern (20) für Rollkörper (21), **dadurch gekennzeichnet, daß** in Umfangsrichtung der Kupplung (10) jede zweite rippenartige Erhöhung (17') des Innenkörpers (11) sowie die dem jeweiligen Rollkörper (21) auf dessen anderer Umfangsseite zugeordnete rippenartige Erhöhung (19) des Ringkörpers (12) einander radial überdecken.

3. Wellenkupplung nach Anspruch 1 oder einem der folgenden, **dadurch gekennzeichnet, daß** der Innenkörper (11) und der Ringkörper (12) mit Codierelementen (28, 29) zur Zuordnung der funktionsgerecht korrespondierenden rippenartigen Erhöhungen (17', 19') zueinander versehen sind.

## Claims

1. Torsionally flexible shaft coupling (10) having a hubside inner body (11) and an outer annular body (12) in an arrangement concentric with the coupling axis of rotation (A), wherein the outer peripheral surface of the inner body (11), like the inner peripheral surface of the annular body (12), is provided with alternating troughs (16, 18) and rib-like elevations (17, 19 and/or 17', 19'), wherein the troughs (16, 18) of inner body (11) and annular body (12) having their concave trough surfaces directed towards one another form chambers (20) for receiving in each case a rubber-elastic rolling body (21), and wherein each two rib-like elevations (17, 19 and/or 17', 19') of inner body (11) and annular body (12) directed towards one another so as to leave a motional gap (27) may pass one another, **characterized in that** at least in the region of two mutually corresponding elevations (17', 19') their motional gap (27) is displaced substantially radially away from, or towards, the coupling axis of rotation (A) in such a way that one of the two rib-like elevations (17') on the one coupling body (11 or 12) may move into the path of motion of the - in peripheral direction of the coupling (10) - adjacent rib-like elevation (19) of the other coupling body (12 or 11).

2. Shaft coupling according to claim 1 having an even number of chambers (20) for rolling bodies (21), **characterized in that** in peripheral direction of the coupling (10) every second rib-like elevation (17') of the inner body (11) as well as the rib-like elevation (19) of the annular body (12) associated with the respective rolling body (21) at the latter's other peripheral side overlap one another radially.

3. Shaft coupling according to claim 1 or one of the following claims, **characterized in that** the inner body (11) and the annular body (12) are provided with coding elements (28, 29) for associating the functionally appropriately corresponding rib-like elevations (17', 19) with one another.

## Revendications

1. Accouplement d'arbres (10) à élasticité en torsion, avec un corps intérieur (11), côté moyeu, et un corps annulaire (12) extérieur, en agencement concentrique par rapport à l'axe de rotation d'accouplement (A), la surface périphérique extérieure du corps intérieur (11), ainsi qu'également la surface périphérique intérieure du corps annulaire (12) étant munies de cavités (16, 18), alternant entre elles, et de bossages (17, 19 ou 17', 19') du genre de nervures, les cavités (16, 18), tournées les unes vers les autres par leurs surfaces de cavité concave, du corps intérieur (11) et du corps annulaire (12) formant des chambres (20) pour recevoir chacune un corps de roulement (21) ayant l'élasticité du caoutchouc, et chaque fois deux bossages (17, 19 ou 17', 19') du genre de nervures, tournés l'un vers l'autre en laissant subsister un interstice de déplacement (27), appartenant au corps intérieur (11) et du corps annulaire (12) pouvant passer les uns à l'intérieur des autres, **caractérisé en ce que**, au moins dans la zone de deux bossages (17', 19') se correspondant, leur intervalle de déplacement (27') s'écarte ou se rapproche, sensiblement radialement, de l'axe de rotation d'accouplement (A), de manière que l'un des deux bossages (17') du genre de nervures, réalisé sur un premier corps d'accouplement (11 ou 12), puisse arriver dans la trajectoire de déplacement du bossage (19) du genre de nervure, voisin dans la direction périphérique de l'accouplement (10), de l'autre corps d'accouplement (12 ou 11).

2. Accouplement d'arbres selon la revendication 1, avec un nombre pair de chambres (20) pour des corps de roulement (21), **caractérisé en ce que**, dans la direction périphérique de l'accouplement (10), chaque deuxième bossage (17') du genre de nervure du corps intérieur (11), ainsi que le bossage (19) du genre de nervure, associé au corps de roulement (21) respectif sur son autre côté périphérique, du corps annulaire (12), se chevauchent mutuellement radialement

3. Accouplement d'arbres selon la revendication 1 ou Tune des revendications suivantes, **caractérisé en ce que** le corps intérieur (11) et le corps annulaire (12) sont munis d'éléments de codage (28, 29) pour assurer l'association mutuelle fonctionnellement correcte des bossages (17', 19') du genre de nervures correspondants.
